# EUROPEAN PATENT SPECIFICATION

(11) **EP 2 171 668 B1**
(45) Date of publication and mention of the grant of the patent: **23.05.2012**
(21) Application number: 08774179.9
(22) Date of filing: 20.06.2008
(51) Int. Cl.: G06Q 30/00

(54) **METHOD AND SYSTEM FOR IDENTIFYING CONTENT ITEMS TO MOBILE TERMINALS**
VERFAHREN UND SYSTEM ZUM IDENTIFIZIEREN VON INHALTSPOSTEN GEGENÜBER MOBILEN ENDGERÄTEN
PROCÉDÉ ET SYSTÈME POUR IDENTIFIER DES ÉLÉMENTS DE CONTENU À DES TERMINAUX MOBILES

(30) Priority: 20.06.2007 US 936644 P; 19.02.2008 GB 0802986
(43) Date of publication of application: 07.04.2010
(73) Proprietor: Apple Inc., Cupertino, CA 95014 (US)
(72) Inventor: AALTONEN, Janne, FIN-20900 Turku (FI); AHOPELTO, Timo, FIN-00120 Helsinki (FI)
(74) Representative: Barton, Russell Glen
(86) International application number: PCT/EP2008/057880
(87) International publication number: WO 2008/155412

(56) References cited:
- WO-A-2006/105202
- US-A1- 2002 046 341
- US-A1- 2002 052 788
- US-A1- 2003 208 754

## Description

### Field of the Invention

The present invention relates generally to methods and systems for selecting content items for transmission to a user of a mobile terminal via a communications network, the content items being associated with an object to be purchased by the user.

### Background Information

Usage of cellular or mobile telephones is very popular and common. In a typical arrangement for use of a mobile telephone, a user subscribes to a mobile telephone service offered by a mobile telephone operator or carrier and enters into a pre-paid or post-paid plan with the mobile telephone operator. A pre-paid subscription plan is usually an arrangement where the user pays in advance for the telephone services to be used over a future period of time. A post-paid subscription plan is usually an arrangement where the user pays for the telephone services after using the services.

The services available using the mobile telephone may be voice services (i.e., making and receiving telephone calls), messaging services such as Short Message Service (SMS), Multimedia Message Service (MMS), data services such as Internet browsing or Wireless Application Protocol (WAP) browsing, video calls, downloading content, streaming content, purchasing applications such as games or other software, using location, guidance or navigation services, finding information, and communicating with a group of people and others.

The popularity of mobile telephones has also enabled their use, along with related infrastructure, as a media for providing mobile marketing, i.e., advertisements to the users of the telephones.

In addition, the ubiquitous presence of mobile telephones has caused the development of business models and companies dedicated to selling tangible goods and services in response to orders placed via the Internet or through use of other ordering systems, such as telephone services. Examples of such companies include Amazon.com, eBay, Dominos Pizza, DVD delivery companies such as Netflix, food delivery companies, etc.

Some companies have expanded on the sale of goods and services delivered in response to orders placed via the Internet and sell digital or intangible goods and services such as ring tones, videos, television programs, games, software, applications, music, etc. in response to orders placed via the Internet and/or through the use of mobile telephones. Other companies sell tickets for public transportation, to movie theaters and the like in response to orders placed via the Internet and/or through the use of mobile telephones.

In general, at the present time, various different kinds of goods, whether tangible and physical or intangible and digital, can be sold via mobile and Internet channels for immediate delivery, as in the case of digital goods, or can be delivered later, as in the case of physical goods. In addition mobile and Internet channels can be used as a payment method for immediate delivery of goods if Internet or mobile payment methods are implemented at the point of sale (POS).

Patent document US 2002/0052788, published on 2nd May 2002, discloses a system for selecting content items (i.e. advertisements) for transmission to a user terminal, where the content items are selected based on the credit status of a user account balance in relation to one or more objects represented by said content items. The user account balance is kept at user financial information servers.

However, at the solution of the present invention the user terminal is a mobile terminal and the credit status is derivable from a billing system arranged to record usage of the communications network by the user.

### Summary of the Invention

In accordance with at least one embodiment of the invention, methods, systems and software are provided for supporting or implementing functionality to select content items for transmission to a user of a mobile terminal via a communications network, as specified in the independent claims. This is achieved by a combination of features recited in each independent claim. Accordingly, dependent claims prescribe further detailed implementations of the present invention.

The present invention is directed at least in part to a method and system for notifying goods and services to particular users of mobile terminals via content items relating thereto and on the basis of the users' credit status. In particular, advertisements are only sent if the credit status of a given user satisfies a predetermined status type, an example of which is that the user has sufficient credit in one or more of his accounts. An advantage of this approach is that network resources are only used in respect of the advertising of products that the user can actually afford to buy. This therefore provides a mechanism for efficiently managing usage of network resources in respect of unsolicited advertising.

In another aspect, embodiments of the invention provide a means of marketing goods and services to particular target groups of users sharing a common profile, which may be selected to increase the likelihood of the users responding to the advertisements and purchasing the advertised goods and services. The common profile of users may be based on the amount of pre-paid credit collectively available to the users.

### Brief Description of the Drawings

The invention, together with further objects and advantages thereof, may best be understood by reference to the following description taken in conjunction with the accompanying drawings, wherein like reference numerals identify like elements, and wherein:
Figure 1 is a schematic of an exemplifying architecture of an advertisement delivery system in accordance with the invention.
Figure 2 is a more detailed schematic of the advertisement delivery system in accordance with the invention.

### Detailed Description

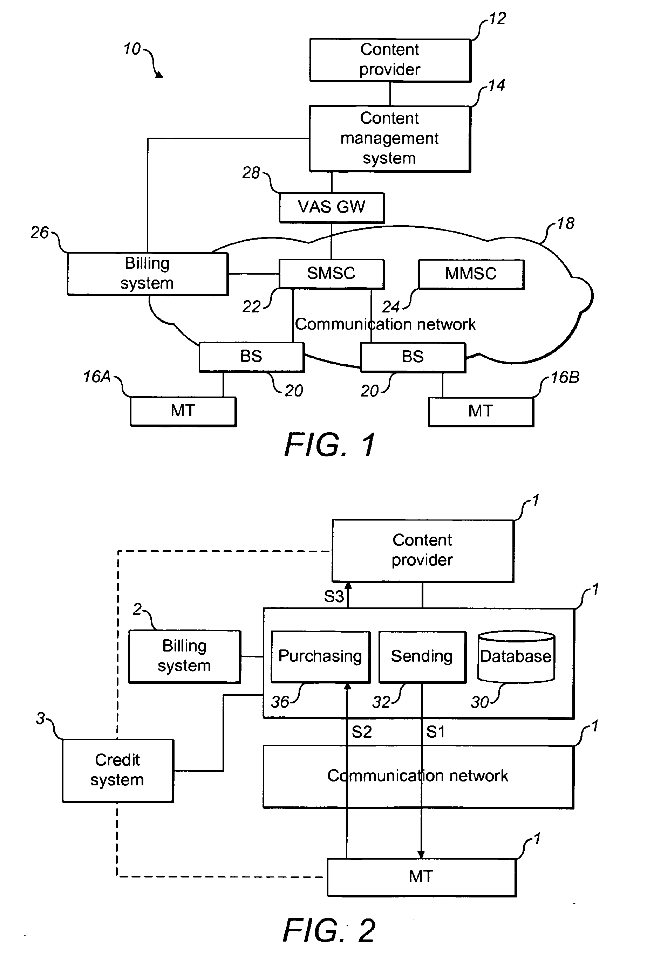

Referring to the accompanying drawings wherein the same reference numerals refer to the same or similar elements, FIG. 1 shows an architecture of an embodiment of a delivery system in accordance with the invention which is designated generally as 10. System 10 may be implemented to provide subsidized or even free mobile telephone services, the subsidy being provided by content providers whose content are directed to subscribers or users of the mobile telephone service. System 10 may be also implemented so that the advertisement revenues are not used to subsidise access to network services

The system 10 includes one or more content providers 12, defined to include any and all entities or individuals that want to advertise products or services to customers, and a content management system 14 that is operated by, for example, an advertising delivery company.

Content providers 12 can thus refer to a brand owner, a service provider, an advertisement agent, a merchant or any other party that wants to provide advertisements to recipients. Advertisements can be commercial, such as a product or service promotion, or non-commercial, such as a general information service notification. A content provider 12 can also be a store having a physical presence, an on-line store and the like, which sell or deliver goods and provide services directly to users ordering via the Internet or their mobile terminals 16A, 16B (collectively referred to as 16).

Typically, the operator of the content management system 14 is a company in the business of delivering advertisements from several advertisers, i.e., it is the intermediary between content providers 12 and the operators of the content distribution channels. Operation of the content management system 14 is typically managed over an Internet interface.

The content management system 14 preferably includes tools for each content provider to define rules of their delivery campaign, e.g, to enable them to tailor the advertisement campaign to their specific requirements. This may include reserving, programming and/or booking an advertising campaign via an Internet interface. Parameters which are determined include, but are not limited to, the time period or periods when to send advertisements, the duration of the advertising campaign, the target group or groups, demographics of the target group(s), the format or type of advertisement, the target price level or cost per advertisement or for the advertising campaign in its entirety, the sociological background of the target audience, demographics of the target group(s) including, for example, age, sex and income level(s), target telephone type, etc. In addition to determining the rules, each content provider 12 typically provides content to the content management system 14 in the form of data, text, pictures, video, audio, html-documents, links, television content, videos, HTML, xml, xHTML, WAP pages, web pages, etc., or any digital content compatible for reception and display by the users' mobile terminals 16A, 16B. All of the functions relating to the interface to the content management system 14 may be implemented as a computer program resident in the content management system 14.

Mobile terminals 16A, 16B are arranged to use a communications network 18 to communicate with other elements of the system 10 described below. Communications network 18 can utilize any cellular network technologies which include, but are not limited to, GSM (Global System for Mobile communication), WCDMA (Wideband Code Division Multiple Access), CDMA (Code Division Multiple Access), GPRS (General Packet Radio Service), UTRAN (UMTS Radio Access Network), UMTS (Universal Mobile Telecommunications System). In addition to traditional cellular networks, local area networks such as Wireless Local area networks (WLAN), BlueTooth (BT) and other technologies such as WiMax (Worldwide Interoperability for Microwave Access), Broadcasting over DVB-H (Digital Video Broadcasting - Handhelds), ISDB-T (Terrestrial Integrated Services Digital Broadcasting), DMB (Digital Multimedia Broadcasting) or broadcasting over cellular can be used, e.g., to deliver advertisements as discussed below. The communications network 18 can also be a generic Internet access network using any data transport methods. Moreover, the communications network 18 may be any cellular, broadcast, wide area, local area or Internet network. Communications network 18 can also be a combination of different communications networks such as a Wireless Local Area Network (WLAN) and a Wideband Code Division Multiplex (WCDMA) network. Using the foregoing networks, the advertisements from advertisers 12 can be SMS, MMS, WAP Push, Web pages, video, audio, or any digital object.

Subscribers to the mobile telephone operator using the mobile terminals 16A, 16B can use the same communications network or another communications network as the communications network 18 being used to deliver content such as advertisements from advertisers 12 via the content management system 14, i.e., a hybrid network is possible.

The mobile terminals 16A, 16B may be any form of mobile terminal such as a mobile telephone, a multimedia computer, a personal digital assistant (PDA), a laptop computer or a personal computer. In a preferred embodiment, the communications network 18 is a cellular network and the users' mobile terminals 16A, 16B are mobile devices such as a mobile telephone, a multimedia computer, a PDA or a laptop computer.

An advertisement can be delivered to the users' mobile terminals 16A, 16B via the communications network 18. The communications network 18 may be any cellular, broadcast, wide area, local area or Internet network. For example, FIG. 1 shows a typical layout of a cellular communications network 18 including one or more base stations (BS) 20, a Short Message Service Center (SMSC) 22 and a Multimedia Message Service Center (MMSC) 24. Communications network 18 can also be a combination of different communications networks as stated above.

System 10 can also include a billing system 26 coupled to the content management system 14 and/or the communications network 18 or specific parts thereof, i.e., the SMSC 22 as shown in Figure 1, and may be arranged to maintain a credit or money account for each mobile terminal 16A, 16B. The billing system 26 can be arranged to provide the actual credit in this account upon request, or alternatively available credit which may be a function of the actual credit. To this end, the billing system 26 may include a computer program which creates an account for the user of each mobile terminal 16A, 16B, receives inquiries about the balance in the accounts, replies to such inquiries by providing the actual or available credit in the accounts, receives commands to debit specific amounts from the accounts and debits the accounts accordingly, and arranges for replenishment of the amount of credit in the accounts.

Further, billing system 26 may be arranged to monitor and/or meter usage of the communications network 18 by each mobile terminal 16A, 16B and monitor and/or meter usage and payments of or for the advertisements from advertisers 12 being delivered to each mobile terminal 16a, 16B by the content management system 14. The billing system 26 may be a real-time billing system or a close-to-real-time billing system. The billing system 26 or other suitable means associated with the system 10 can thus arrange for payment from users of the mobile terminals 16A, 16B based on their usage of the communications network 18. Usage of the communications network 18 may entail voice services, messaging services (Short Message Service, Multimedia Message Service, Instant Message Service, Electronic mail services), video telephony services, push-to-talk services, data services such as Internet or Wireless Application Protocol (WAP) browsing services, content usage (television, radio, video) services, download services, premium SMS services, among others.

In one embodiment of the invention, billing system 26 meters usage of the services by each user and compares the metered usage with a free or subsidized balance allocated to each user. In this manner, although invoices are not sent to the users, the metered usage is compared with business rules associated with the users and the cost for providing the free or subsidized services to the users is invoiced directly or indirectly from advertisers. Other techniques to provide subsidized or free telephone services to the users are also envisioned. For subsidized telephone services, the users may be responsible for a portion of their usage and thus they would be interested in eliminating unnecessary use of such telephone services.

Arrangement 10 includes a Value Added Service Gateway (VAS GW) 28 that connects communications network 18, or some of the elements thereof such as the SMSC 22 as shown, to the content management system 14. The VAS GW 28 can also be connected to the billing system 26.

Referring now to Figure 2, the manner in which a content provider 12 can conduct a marketing campaign using content management system 14 in accordance with the invention will now be described.

The content provider 12 defines its marketing campaign using a web interface to connect to content management system 14. As an example, the content provider 12 may be an on-line store such as Amazon.com selling and offering for sale objects for users of mobile terminals 16. In the case of content embodied as advertisements, each advertisement may include one or more objects available for purchase and each advertiser 12 may provide a plurality of advertisements for multiple ones of its products. Examples of advertisements that can be delivered include: "Purchase item X", and an SMS or WAP push message with nested links to different items such as "Purchase item X", "Order now Y", "Order now Z". The presence of one or more nested links in advertisements enables the user of the mobile terminal 16 receiving the advertisements to be able to activate the link and purchase the advertised object, either receiving it immediately if it is an object that can be delivered to the mobile terminal 16, receiving it later if it is a tangible object, or receiving the goods/service at the point of sale if information regarding a validated purchase is available at the point of sale. An example of such a point of sale delivery is at a cash register which has a connection to, for example, billing system 26, or a vending machine to which purchase information is sent. The advertisements, also considered as or part of messages herein, preferably also include the price of the advertised goods or services. In addition to nested links, it is also foreseen that the advertisements can provide instructions on how to order goods by, for example, stating "text the message YES to number 16400 to order" or call to "800-555-1234 to order now".

Content management system 14 includes one or more databases 30, only one of which is shown, which store information about each user of the mobile terminals 16, such as demographics, address, sex, age, preferences etc. The same or a different database can also store advertisements received from the advertisers 12.

Content management system 14 also includes an element 32 which, in the case of advertisements, manages the delivery of advertisements received from advertisers 12 and which are sent to users of the mobile terminals 16 via the communications network 18. This delivery element 32 may be implemented as software and/or hardware and may be in the same unit or housing as the database 30 or in a different unit or housing.

Generally, the content management system 14 is arranged to determine and select which advertisement or advertisements are delivered via the communications network 18 to the user of each mobile terminal 16, i.e., by appropriate control and management of the delivery element 32. This determination or selection may be based on the likelihood of the user being able to purchase the advertised goods and/or services. There are several ways to assess the likelihood of the user of a mobile terminal 16 being able to purchase advertised goods and/or services.

In one embodiment of the invention, the delivery element 32 of the content management system 14 is arranged to analyze the user's available credit in order to assess the likelihood of a user being able to purchase advertised goods and/or services. The available credit may be provided by the billing system 26, i.e., from the user's account maintained by the billing system, 26, or from a credit extending system or facility 34, from the user's account provided by the credit extending facility 34. The credit extending facility 34 may be a bank or credit card company. Alternatively, the available credit can be provided to the delivery element 32 in a batch type of database action, i.e., delivered periodically and stored in a database of the content management system 14.

In one embodiment, analysis of the available credit of the user may involve a comparison of the available credit to the purchase price of each of the goods and/or services being advertised. To this end, delivery element 32 includes an algorithm which compares the amount of available credit provided by the billing system 26, credit extending facility 34, to the purchase price of each object the advertiser 12 wants to advertise to each user of a mobile terminal 16. This comparison determines which goods and services can be purchased by the user of the mobile terminal 16, i.e., a user can purchase only objects for which they have sufficient available credit. The delivery element 32 will then select for delivery to the user of the mobile terminal 16 only those advertisements for objects that the user can purchase, and coordinate delivery thereof (message S1).

An advantage of this approach is that network resources are only used in respect of the advertising of products that the user can actually afford to buy. This therefore provides a mechanism for efficiently managing usage of network resources in respect of unsolicited advertising. Thus if the user is not in a position to purchase an object offered for sale by advertiser 12 because they do not have sufficient available credit, then the delivery element 32 will not deliver an advertisement for that object to the user. Alternatively, a message stating "You have reached your credit limit" could be sent.

As an example, advertiser 12 wants to advertise five different objects, namely objects A, B, C, D and E, to a set of target users of mobile terminals 16. The price of each object is: A = $5.00, B = $2.00, C = $20.00, D = $90.00 and E= $80.00. In this example there are two mobile terminal users who fit the target profile of the advertiser, user A and user B, and the determination of whether a user fits the target profile may be a preparatory step performed by the content management system 14 involving a comparison of the user's profile to the advertiser's target profile entered into the content management system, 14 via an interface discussed above. User A is determined to have $85.00 in available credit in a pre-paid account maintained by billing system 26 and user B is determined to have $18.00 in available credit in a pre-paid account maintained by billing system 26.

The algorithm in delivery element 32 compares a list of objects provided by the advertiser 12 (for objects sold by advertiser 12 and for which advertiser 12 wants to deliver advertisements) and sorts them based on the price of the object, i.e., B = $2.00, A = $5.00, C = $20.00, E = $80.00 and D = $90.00, and then selects the set of one or more objects to be advertised for each user of a mobile terminal 16 based on the comparison of the price of the object to the available credit for the user. As such, delivery element 32 will determine that user A can receive an advertisement for each of objects A, B, C and E, or one advertisement including each of these objects, and that user B can receive an advertisement for each of objects products A and B, or one advertisement including each of these objects. If a user is determined to be able to receive multiple advertisements, one for each different object, the advertisers 12 may provide a desired order to deliver the advertisements, e.g., an advertisement for the most expensive object first and then the next highest priced object and so on.

Again, in this embodiment of the invention, users only receive advertisements for goods and/or services that they are able to purchase with available credit, i.e., afford, and thus provide a mechanism for allocating network resources for unsolicited messages in a controlled manner, on the basis of credit status. Moreover, when the advertisements include one or more nested links, can immediately use premium SMS or another mobile payment method, some of which are discussed below, to order or pay for the advertised good and/or services.

In another embodiment, after the delivery element 32 of content management system 14 receives the list of objects available for purchase from an advertiser 12 and compares them to the available credit of a user of a mobile terminal 16, the delivery element 32 may be arranged to provide selected ones of the objects to the mobile terminal 16 with indications as to the affordability of the objects by the user of the mobile terminal 16. This would be appropriate when presenting, for example, objects offered by an on-line shop which can be ordered immediately. The objects that the user can currently afford, i.e., they have available credit of an amount greater than the purchase price of each object, may be marked with a marker while those the user cannot afford would not be so marked. Alternatively, the delivery element 32 could provide commands to the mobile terminal 16 to cause the mobile terminal 16 to arrange the objects such that affordable objects are shown on one side of the mobile terminal's display screen, e.g., at a top of the screen, and others are shown on the opposite side, e.g., at a bottom of the screen. In this arrangement, the presentation of the objects available for purchase on-line using the mobile terminal 16 is arranged according to information from billing system 26.

Instead of having delivery element 32 of the content management system 14 organize and provide a list of objects with an indication of affordability to the mobile terminal 16, it is also possible to provide the lists of objects and purchase prices to the mobile terminal 16, along with the available credit to the user of the mobile terminal 16, and then enable the mobile terminal 16 to arrange the objects based on price and display the objects as described above, i.e., with an indication of affordability. Thus, the mobile terminal 16 would include a computer program which receives information from the billing system 26 or credit extending facility 34 to sort the information about the objects available for purchase based on their price, as provided by advertiser 12.

Additionally, it is foreseen that a user or another person can set a limit on the maximum price for any object that can be advertised to the user via their mobile device. This way, for example, parents or employers could set a maximum limit on the amount of money in respect of which advertisements are delivered, irrespective of whether or not the user has sufficient credit available. In addition, the credit available to any given user could be linked to accounts associated with other users, such as is the case with group subscriptions held with mobile phone operators. In such an arrangement the credit status could be identified from the pool of credit derived from individual members of the group. Examples of such groups include family groups.

When a user decides to order an advertised object via their mobile terminal 16, the product can be ordered by, for example, sending a premium SMS to a purchasing element 36 of the content management system 14. Purchasing element 36 would debit the amount of the object or objects being purchased from the user's account maintained by the billing system 26, or at the credit extending facility 34, and preferably confirm the order with advertiser 12 by sending a message S3 to the advertiser 12. The advertiser 12 could thus keep track of the success of its advertising campaign as reflected by sales of the advertised goods and/or services.

The mobile terminal 16 could also communicate directly with the credit extending facility 34 to notify the credit extending facility 34 of the purchase and the need to adjust the user's credit account, with the credit extending facility 34 then verifying the purchase to the advertiser 12, possibly directing payment to the advertiser 12 for the advertised object being purchased by the user.

In embodiments described above, the delivery of advertisements to the user of the mobile terminal 16 is based generally on the available credit to the user. There are numerous ways to determine available credit. One is to consider that all credit in the account maintained by the billing system 26 or provided by the credit extending facility 34 is available credit, i.e., the available credit equals the actual credit. Another way is to consider that available credit varies as a function of the actual credit in the account. For example, available credit may be determined such that the account must have twice the amount of the purchase, i.e., the available credit is half of the actual credit: Another way would be to consider that the available credit is an amount which would not reduce the actual credit less than an amount needed to pay for a number of minutes of telephone calls, or other services. Yet another way would be to consider that the available credit is a fixed percentage of the actual credit, e.g., 90% so that there would always remain after a purchase a 10% margin.

In one embodiment, the content management system 14 is arranged to reserve a portion of the available credit (or actual credit) equal to the amount of an object in an advertisement being delivered to a user upon delivery of the advertisement. Thus, if the user wants to purchase the advertised object, they would definitely have available credit. However, in such an arrangement the user would not be able to use this reserved credit for other purchases. The reserved credit may be time-limited so that it is reserved only for a period of time after delivery of the advertisement. The reservation of credit may be performed by communicating the purchase price of each object in an advertisement being delivered by the delivery element 32 to the purchasing element 36 which then communicates with the billing system 26 or credit extending facility 34 to advise of the reserve or hold on the available credit in an amount equal to the highest purchase price of an object in the advertisement being delivered to the user.

By means of the invention described above, a user of a mobile terminal 16 is exposed to an advertisement for goods and/or services, and if the advertisement is successful, meaning that the user will want to purchase those advertised goods and/or services, one embodiment of the invention includes a payment mechanism to enable the user to purchase the goods and/or services, which preferably can be implemented using the mobile terminals 16.

One possible arrangement for enabling payments using mobile terminals 16 is to use a premium short message service (pSMS). With pSMS, there is a set price per message which is typically higher than the price to send a conventional SMS. For example, the set price for single pSMS can vary between tens of cents to several dollars to tens of dollars.

Alternative methods for enabling payments using mobile terminals 16 include using specific reader devices at the point of sales terminals, at which the purchased goods and/or services are being delivered, and/or using smart cards of the mobile terminals 16 for credit identification. In such arrangements, for example, the monetary standard EMV (Europay, MasterCard and Visa, which is a standard for inter-operation of IC cards ("Chip cards") and IC capable POS terminals, for authenticating credit and debit card payments) can be used. There may also be specific interfaces such as Near Field Communication (NFC) in the mobile terminals 16 to enable completion of secure sales transactions.

Additional alternative methods for enabling payments using mobile terminals 16 include using micro credit or wallet functionalities of mobile terminals 16 to transfer funds from one mobile terminal to another or to a point of sales terminal. Transfers may be made using, for example, Short Message Service (SMS) from one mobile terminal to another via a specific micro credit sharing system or the transfer may be made using Bluetooth technology between the terminals, the transfer may be made using a combination thereof.

Further, there could also be an Internet type of payment procedure such as using PayPal and other similar Internet-based payment mechanisms, to pay for the goods or services.

Further there could also be post-paid users where the invoices are paid, for example, monthly. For these users, preferably there is a monthly credit limit. Alternatively, post-paid users could set a single purchase limit via a web interface or by calling customer service to set the single purchase limit.

The invention is not dependent or limited to any specific method of paying for goods or services in response to advertisements delivered to the mobile terminals 16 or otherwise. The foregoing examples thus do not limit the possible payment mechanisms that can be used in accordance with the invention.

The invention enables innovative and focused mobile marketing and advertising. Indeed, the popularity of mobile telephones has enabled their use, along with related infrastructure, as a media for providing mobile marketing, i.e., advertisements to the users of the telephones.

This is important because such a concept is considered by advertisers as the next new channel to directly reach recipients since it utilizes core assets and characteristics of the mobile media, namely, it is personal in that it is directed solely to individual recipients, it is "always on" and can reach the recipients whenever they access their communications devices, it is mobile and naturally forms groups of people who communicate actively with each other. These characteristics combined with social networks-based approaches of the Internet could form a very powerful base to execute marketing strategies.

In general, mobile marketing and advertising can be divided into the following four categories: mobile marketing, mobile advertising, mobile direct marketing and mobile customer relation management (CRM). The present invention in any of its forms discussed above is applicable to all categories.

Mobile marketing is commonly considered as the systematic planning, implementing and control of a mix of business activities intended to bring together buyers and sellers for the mutually advantageous exchange or transfer of products or services where the primary point of contact with the recipient is via their mobile device.

Mobile advertising is commonly considered as the paid, public, non-personal announcement of a persuasive message by an identified sponsor as well as the non-personal presentation or promotion by a firm of its products to its existing customers and potential customers where such communication is delivered to a mobile telephone or other mobile device. Examples of mobile advertising include: Wireless Application Protocol (WAP) Banner ads, mobile search advertising, mobile video bumpers, and interstitial ads in or on device portals.

Mobile direct marketing is commonly considered a sales and promotion technique in which promotional materials are delivered individually to potential customers via the potential customer's mobile telephone or other mobile device. Examples of mobile direct marketing include the sending of Short Message Service (SMS), Multimedia Message Service (MMS) or Wireless Application Protocol (WAP) push messages, Bluetooth messaging and other marketing to mobile telephones or other mobile devices.

Mobile customer relation management is commonly considered as a combination of all the foregoing in a manner that establishes a long-term, engaging relationship between the customer and the marketing or promoting company.

At present, mobile marketing and advertising is mostly based on push campaigns to opt-in a recipient mobile number in a database, or pull campaigns that acquire mobile telephone numbers from recipients. The most typical example of the pull campaign is the "text-to-win" campaign where, e.g., a soft drink bottle contains a short code to be sent via text message to a certain telephone number. In return, the recipient receives a notification if they have won with the selected marketing message, or a series of messages is broadcast to their mobile telephone. Other popular methods of direct advertisement are achieved using text and video messaging.

Examples of the use of the mobile marketing and advertising campaigns which can be implemented using the invention include a campaign to offer MP3 downloads to users of mobile terminals. For such a campaign, the price of each download is assumed to be $1.25 and the target audience is all users of mobile terminals. In accordance with the invention, an advertiser 12 will deliver an advertisement to the content management system 14 such as "Click this link to download the new hit from xxx". This advertisement will be sent only to those users with available credit equal to or higher than $1.25, as determined by delivery element 32 upon receiving information from billing system 26 and/or credit extending facility 34. The advertisement could also be sent to those users with a post-paid account. As the user clicks on the advertisement, the amount of $1.25 is invoiced or debited from their account, through operation of the purchasing element 36, and the music file is downloaded to their mobile terminal. The download may be made through the communications network 18 upon the purchasing element 36 communicating with a download source, which may be the advertiser 12 itself or another, separate source.

Another example of a mobile marketing and advertising campaign using the invention is a campaign in which an advertisement with one or more nested links, such as an SMS, MMS, WAP Push, or link to a WAP or web site, is delivered to mobile terminals. An advertisement provided by advertiser 12 may be "We offer Pizza A for $4, Pizza B for $6 and Pizza C for $8. Click on the Pizza to order now." In accordance with the invention, the advertisement being delivered to the users would be different depending on the available credit for each user. Thus, when the advertisement is delivered to users having at least $6.00 but less than $8.00 available credit, the advertisement would be "We offer Pizza A for $4, and Pizza B for $6. Click on the Pizza to order now". Pizza C would not be included in the advertisement to these users since they do not have available credit to pay for it. When the advertisement is delivered to users having at least $8.00 available credit, the advertisement would be the entire advertisement while when the advertisement is delivered to users having at least $4.00 but less than $6.00 available credit, the advertisement would be "We offer Pizza A for $4. Click on the Pizza to order now". Pizzas B and C would not be included in the advertisement to these users since they do not have available credit to pay for it. When the user clicks on the word Pizza in any of the advertisements, a premium SMS is sent, and a pizza store with a delivery service is informed about the address of the user and about the order. The pizza store is provided with the money from the user's account by the operator of the system 10.

In one embodiment of the invention, the prices included in the advertisements being delivered to the users' mobile terminals is based on the account status of each user, e.g., actual or available credit of each user. Thus, there may be flexible pricing for the objects being offered for sale by an advertiser 12, i.e., the advertised price will vary depending on the amount of actual or available credit.

Several computer programs resident on computer-readable media may be used in the invention. One computer program is resident in the content management system 14 and manages delivery of advertisements to users' mobile terminals together with responses to the advertisements, and coordinates payment for advertised objects and delivery of the advertised objects to the users.

One embodiment of a computer program is arranged to obtain an indication of available credit for a user of the mobile terminal, receive one or more advertisements each for one or more different objects with an indication of a purchase price of each object, and deliver one of the advertisements to the user via the communications network based on analysis of the purchase price of the object(s) therein relative to the user's available credit. This analysis may be a determination as to which object or objects a user can purchase with their available credit so that advertisements for objects are not delivered to a user who does not have available credit to purchase the object or objects in the advertisements.

Moreover, the computer program may receive a response from the mobile terminal to a delivered advertisement for purchase of an advertised object, coordinate delivery of the advertised object and adjust the user's available credit based on the purchase price of the advertised object. As such, a message may be generated by the computer program when a user indicates a desire to purchase an advertised object, the message being sent to an advertiser from which the advertisement was received to enable the advertiser to provide the advertised object to the user.

To obtain the available credit, the computer program can receive and store account information about the user, or communicate with a billing system or credit extending facility to obtain account information. The account information may be the user's actual balance in which case, the computer program can apply a function to this actual credit amount to derive or determine the available credit.

Further, prior to delivery of the advertisement, the computer program can determine whether the user satisfies a target user profile for the advertisement. If not, the advertisement is not delivered to the user.

The computer program can formulate the advertisements to include a nested link therein which enables the user to activate the link and purchase an advertised object. If multiple advertisements are provided, e.g., by a advertiser using an interface to the computer program, the computer program can sort the advertisements based on the purchase price of objects set forth therein and deliver the advertisements based on purchase price.

In one embodiment, the computer program provides an advertisement including only objects a user can purchase with available credit. In another embodiment, the computer program forms and/or delivers an advertisement for objects the user can and cannot afford but provides an indication of whether the user can or cannot afford each object.

Upon delivery of an advertisement, the computer program can place a reserve on the available credit of the user equal to the purchase price of the at least one object in the delivered advertisement. In this manner, it will be assured that the user does not reduce their available credit between the time of delivery of the advertisement and the time they decide to purchase the advertised object to a level at which they cannot purchase the advertised object, i.e., cannot afford the advertised object.

In the above embodiments, the decision as to whether or not to transmit unsolicited content relating to goods and services is dependent on the credit determined to be available to the recipient of the content. Thus, broadly speaking, embodiments of the invention provide an improved mechanism for directed advertising in the sense that advertisements are only sent if the user is deemed to be capable of purchasing the advertised goods/services. This concept could be applied in relation to characteristics other than credit status, such as availability status. For example if a user is on holiday, he is less likely to consider purchasing goods and services relating to his work, despite the fact that a) the goods and services being advertised match his profile, and he would otherwise want to proceed with the corresponding transaction and b) he has sufficient credit to make the transaction. Thus embodiments of the invention could check the availability status of the user when deciding whether or not to send an advertisement, and determine whether or not the user is in a position to act upon the advertisement. Availability status can be derived from one or more sources including user calendar, schedule, activity and context data, blogs and other such sources associated with the user. The recorded data can be supplemented by location data derivable from a positioning determining system such as GPS or from mobile phone data.

In the context of this document, computer-readable medium could be any means that can contain, store, communicate, propagate or transmit a program for use by or in connection with the method, system, apparatus or device. The computer-readable medium can be, but is not limited to (not an exhaustive list), electronic, magnetic, optical, electromagnetic, infrared, or semi-conductor propagation medium. The medium can also be (not an exhaustive list) an electrical connection having one or more wires, a portable computer diskette, a random access memory (RAM), a read-only memory (ROM), an erasable, programmable, read-only memory (EPROM or Flash memory), an optical fiber, and a portable compact disk read-only memory (CDROM). The medium can also be paper or other suitable medium upon which a program is printed, as the program can be electronically captured, via for example, optical scanning of the paper or other medium, then compiled, interpreted, or otherwise processed in a suitable manner, if necessary, and then stored in a computer memory. Also, a computer program or data may be transferred to another computer-readable medium by any suitable process such as by scanning the computer-readable medium.

Having described exemplary embodiments of the invention with reference to the accompanying drawings, it will be appreciated that the present invention is not limited to those embodiments, and that various changes and modifications can be effected therein by one of ordinary skill in the art without departing from the scope of the invention as defined by the appended claims.

## Claims

1. A system for selecting content items for transmission to a user of a mobile terminal (16A, 16B) via a communications network (18), each said content item being associated with an object to be purchased by the user, the system comprising:
interface means for receiving data indicative of at least one said content item;
means for deriving a credit status of the user in relation to one or more objects, each object corresponding to the at least one said content item and said credit status being derivable from a billing system (26) arranged to record usage of the communications network (18) by the user; and
means for generating a message containing a content item, said item being selected on the basis of the derived credit status, and selectively delivering the generated message to the user via the communications network (18).

2. The system of claim 1, wherein said interface means is arranged to receive the content item from an electronic messaging system, and the generated message provides means for enabling the user to respond to a delivered content item to enable provision of the associated object to the user.

3. The system of claim 1 or claim 2, further comprising means for accessing a database holding user profile data, wherein the deriving means is arranged to access the database to determine whether the user satisfies a target user profile for delivery of the content item and to selectively identify the credit status for the user in the event that the user satisfies a predetermined user profile in respect of the content item.

4. A system according to anyone of the preceding claims, wherein the system is arranged to access a credit recording system holding data indicative of the credit status of the user, whereby to derive said status of the user.

5. The system of claim 4, further comprising means for enabling the user of the mobile terminal to respond to a delivered content item and purchase an object associated therewith.

6. The system of claim 4 or claim 5, further comprising account management means arranged to identify actual credit associated with the user, wherein the identifying means is arranged to apply a function to the actual credit so as to identify said credit status.

7. The system of any one of claim 4 to claim 6, wherein there is a plurality of content items, each for a different object, said identifying means being arranged to identify the credit status for each said object in an order dependent on the purchase price thereof.

8. The system of any one of claim 4 to claim 7, wherein said means for deriving a credit status of the user are arranged such that the content item delivered to the user includes only one or more objects having a purchase price less than or equal to the available credit for that user.

9. The system of any one of claim 4 to claim 8, wherein the item comprises a plurality of content items, each corresponding to a different set of a plurality of objects, and said deriving means are arranged to derive the credit status associated with the user in respect of each said set of objects so as to select one of the content items for delivery to the user.

10. A method for delivering content items to a user of a mobile terminal (16A, 16B) using a communications network (18) each said content item being associated with an object to be purchased by the user, comprising:
receiving data indicative of at least one said content item to be delivered to the mobile terminal (16A, 16B),
accessing a billing system (26) arranged to record usage of the communications network (18) by the user so as to identify a credit status of the user in relation to at least one object associated with said at least one content item;
selecting a content item for delivery to the user via the communications network (18) on the basis of the credit status identified ; and
generating a message containing the selected content item, and selectively delivering the generated message to the user via the communications network (18).

11. The method of claim 10, further comprising receiving data indicative of the content item from an electronic messaging system, and generating a message for delivery to the electronic messaging system to enable provision of the associated object to the user.

12. The method of claim 10 or claim 11, further comprising accessing a database holding user profile data so as to determine whether the user satisfies a target user profile for delivery of the content item, and selectively identifying the credit status for the user in the event that the user satisfies a predetermined user profile in respect of the content item.

13. The method of claim 10, further comprising accessing a credit recording system holding data indicating actual credit associated with the user and applying a function to the actual credit so as to identify said credit status.

14. The method of claim 10 or claim 13, wherein there is a plurality of content items, each for a different object, the method further comprising identifying the credit status for each said object in an order dependent on the purchase price thereof and delivering the selected content item to the user's mobile terminal in order based on purchase price.

15. A computer program, or a suite of computer programs, comprising a set of instructions arranged to cause a computer, or a suite of computers, to perform the method according to any one of claim 10 to claim 14.

## Patentansprüche

1. System zum Auswählen von Inhaltselementen zur Übertragung an einen Nutzer eines mobilen Endgeräts (16A, 16B) über ein Kommunikationsnetzwerk (18), wobei jedes Inhaltselement mit einem durch den Nutzer zu kaufendes Objekt verknüpft ist, wobei das System umfasst:
Schnittstellenmittel zum Empfangen von Daten bezeichnend für mindestens ein Inhaltselement;
Mittel zum Ableiten eines Guthabenstatus des Nutzers in Bezug auf ein oder mehrere Objekte, wobei jedes Objekt dem mindestens einen Inhaltselement entspricht und der Guthabenstatus ableitbar von einem Abrechnungssystem (26) ist,
welches zum Aufzeichnen der Nutzung des Kommunikationsnetzwerks (18) durch den Nutzer eingerichtet ist; und
Mittel zum Erzeugen einer Nachricht, welche ein Inhaltselement enthält, wobei das Element auf der Grundlage des abgeleiteten Guthabenstatus gewählt wird, und selektives Ausliefern der erzeugten Nachricht an den Nutzer über das Kommunikationsnetzwerk (18).

2. System gemäß Anspruch 1, wobei das Schnittstellenmittel zum Empfangen des Inhaltselements von einem elektronischen Nachrichtensystem eingerichtet ist und die erzeugte Nachricht Mittel bereitstellt, die es dem Nutzer ermöglichen auf ein ausgeliefertes Inhaltselement zu antworten, um die Bereitstellung des verknüpften Objekts an den Nutzer zu ermöglichen.

3. System gemäß Anspruch 1 oder Anspruch 2, weiterhin umfassend Mittel zum Zugriff auf eine Datenbank, welche Nutzerprofildaten hält, wobei das Ableitungsmittel eingerichtet ist zum Zugriff auf die Datenbank, um festzustellen, ob der Nutzer ein Zielnutzerprofil für die Auslieferung des Inhaltselements erfüllt und um den Guthabenstatus für den Nutzer selektiv zu identifizieren in dem Fall, dass der Nutzer ein vorbestimmtes Nutzerprofil in Bezug auf das Inhaltselement erfüllt.

4. System gemäß irgendeinem der vorhergehenden Ansprüche, wobei das System eingerichtet ist zum Zugriff auf ein Guthabenaufzeichnungssystem, welches Daten bezeichnend für den Guthabenstatus des Nutzers hält, wodurch der Status des Nutzers abgeleitet wird.

5. System gemäß Anspruch 4, weiterhin umfassend Mittel, das es dem Nutzer des mobilen Endgeräts ermöglicht auf ein ausgeliefertes Inhaltselement zu antworten und ein damit verknüpftes Objekt zu kaufen.

6. System gemäß Anspruch 4 oder Anspruch 5, weiterhin umfassend Kontoverwaltungsmittel eingerichtet zum Identifizieren des aktuellen mit dem Nutzer verknüpften Guthabens, wobei das Identifizierungsmittel zum Anwenden einer Funktion auf das aktuelle Guthaben eingerichtet ist, um den Guthabenstatus zu identifizieren.

7. System gemäß irgendeinem der Ansprüche 4 bis 6, wobei es eine Mehrzahl an Inhaltselementen gibt, jedes für ein unterschiedliches Objekt, wobei das Identifizierungsmittel eingerichtet ist zum Identifizieren des Guthabenstatus für jedes Objekt in einer Reihenfolge, die abhängig von dem Einkaufspreis davon ist.

8. System gemäß irgendeinem der Ansprüche 4 bis 7, wobei die Mittel zum Ableiten eines Guthabenstatus des Nutzers so eingerichtet sind, dass das Inhaltselement, das an den Nutzer ausgeliefert wurde, nur ein oder mehrere Objekte umfasst, welche einen Einkaufspreis haben, der geringer oder gleich dem verfügbaren Guthaben ist.

9. System gemäß irgendeinem der Ansprüche 4 bis 8, wobei das Element eine Mehrzahl an Inhaltselementen umfasst, jedes einem unterschiedlichen Satz von einer Mehrzahl von Objekten entspricht, und die Ableitemittel eingerichtet sind zum Ableiten des mit dem Nutzer verknüpften Guthabenstatus mit Bezug auf jeden Satz von Objekten, um eines der Inhaltselemente zur Auslieferung an den Nutzer auszuwählen.

10. Verfahren zum Ausliefern der Inhaltselemente an einen Nutzer eines mobilen Endgeräts (16A, 16B) ein Kommunikationsnetzwerk (18) nutzend, wobei jedes Inhaltselement mit einem von dem Nutzer zu kaufenden Objekt verknüpft ist, umfassend:
Empfangen von Daten bezeichnend für zumindest das eine Inhaltselement, welches an das mobile Endgerät (16A, 16B) auszuliefern ist,
Zugreifen auf ein Abrechnungssystem (26), welches eingerichtet ist zum Aufnehmen der Nutzung des Kommunikationsnetzwerks (18) durch den Nutzer, um einen Guthabenstatus des Nutzers in Bezug auf mindestens ein mit dem mindestens einen Inhaltselement verknüpftes Objekt zu identifizieren;
Auswählen eines Inhaltselements zur Auslieferung an den Nutzer über das Kommunikationsnetzwerk (18) auf der Grundlage des identifizierten Guthabenstatus; und
Erzeugen einer Nachricht, welche das ausgewählte Inhaltselement enthält, und selektives Ausliefern der erzeugten Nachricht an den Nutzer über das Kommunikationsnetzwerk (18).

11. Verfahren gemäß Anspruch 10, weiterhin umfassend Empfangen von für das Inhaltselement bezeichnenden Daten von einem elektronischen Nachrichtensystem, und das Erzeugen einer Nachricht zur Auslieferung an das elektronische Nachrichtensystem, um die Bereitstellung des verknüpften Objekts an den Nutzer zu ermöglichen.

12. Verfahren gemäß Anspruch 10 oder Anspruch 11, weiterhin umfassend Zugreifen auf eine Datenbank, die Nutzerprofildaten hält, um festzustellen, ob der Nutzer ein Zielnutzerprofil zur Auslieferung des Inhaltselements erfüllt, und selektives Identifizieren des Guthabenstatus für den Nutzer in dem Fall, dass der Nutzer ein vorbestimmtes Nutzerprofil in Bezug auf das Inhaltselement erfüllt.

13. Verfahren gemäß Anspruch 10, weiterhin umfassend Zugreifen auf ein Guthabenaufzeichnungssystem, welches Daten bezeichnend für das aktuelle mit dem Nutzer verknüpfte Guthaben hält und Anwenden einer Funktion auf das aktuelle Guthaben, um den Guthabenstatus zu identifizieren.

14. Verfahren gemäß Anspruch 10 oder Anspruch 13, wobei es eine Mehrzahl an Inhaltselementen gibt, jedes für ein unterschiedliches Objekt, wobei das Verfahren weiterhin Identifizieren des Guthabenstatus für jedes Objekt in einer Reihenfolge abhängig von dem Einkaufspreis davon und Ausliefern des ausgewählten Inhaltselements an das mobile Endgerät des Nutzers in der Reihenfolge auf Grundlage des Einkaufspreises umfasst.

15. Ein Computerprogramm oder eine Sammlung von Computerprogrammen, umfassend einen Satz von Instruktionen eingerichtet einen Computer oder eine Reihe von Computern zu veranlassen das Verfahren gemäß irgendeinem der Ansprüche 10 bis 14 auszuführen.

## Revendications

1. Un système de sélection d'articles de contenu pour transmission à un utilisateur d'un terminal mobile (16A, 16B) via un réseau de communication (18), chacun desdits articles de contenu étant associé à un objet devant être acheté par l'utilisateur, le système comprenant :
des moyens d'interfaçage pour la réception de données représentatives d'au moins l'un desdits articles de contenu ;
des moyens de dérivation d'un statut de crédit de l'utilisateur en relation avec un ou plusieurs objets,
chaque objet correspondant à l'au moins un desdits articles de contenu et ledit statut de crédit pouvant être dérivé d'un système de facturation (26) configuré pour enregistrer l'usage du réseau de communication (18) par l'utilisateur ;
des moyens de génération d'un message contenant un article de contenu, ledit article étant sélectionné sur la base du statut de crédit dérivé, et de remise sélective du message généré à l'utilisateur via le réseau de communication (18).

2. Le système de la revendication 1, dans lequel lesdits moyens d'interfaçage sont configurés pour recevoir l'article de contenu depuis un système de messagerie électronique, et le message généré fournit des moyens pour permettre à l'utilisateur de répondre à un article de contenu remis pour permettre l'obtention de l'objet associé par l'utilisateur.

3. Le système de la revendication 1 ou 2, comprenant en outre des moyens d'accès à une base de données conservant des données de profil utilisateur, dans lequel les moyens de dérivation sont configurés pour accéder à la base de données pour déterminer si l'utilisateur satisfait ou non un profil d'utilisateur cible pour la remise de l'article de contenu et pour identifier sélectivement le statut de crédit pour l'utilisateur dans le cas où l'utilisateur satisfait un profil utilisateur prédéterminé à l'égard de l'article de contenu.

4. Un système selon l'une des revendications précédentes, dans lequel le système est configuré pour accéder à un système d'enregistrement de crédit conservant des données représentatives du statut de crédit de l'utilisateur, de manière à dériver ledit statut de l'utilisateur.

5. Le système de la revendication 4, comprenant en outre des moyens pour permettre à l'utilisateur du terminal mobile de répondre à un article de contenu remis et acheter un objet associé à celui-ci.

6. Le système de la revendication 4 ou de la revendication 5, comprenant en outre des moyens de gestion de compte configurés pour identifier le crédit effectif associé à l'utilisateur, dans lequel les moyens d'identification sont configurés pour appliquer une fonction au crédit effectif de manière à identifier ledit statut de crédit.

7. Le système de l'une des revendications 4 à 6, dans lequel il existe une pluralité d'articles de contenu, chacun pour un objet différent, lesdits moyens d'identification étant configurés pour identifier le statut de crédit pour chacun desdits objets dans un ordre dépendant du prix d'achat de celui-ci.

8. Le système de l'une des revendications 4 à 7, dans lequel lesdits moyens de dérivation d'un statut de crédit de l'utilisateur sont configurés de sorte que l'article de contenu remis à l'utilisateur n'inclue qu'un ou plusieurs objets présentant un prix d'achat inférieur ou égal au crédit disponible pour cet utilisateur.

9. Le système de l'une des revendications 4 à 8, dans lequel l'article comprend une pluralité d'articles de contenu, chacun correspondant à un ensemble différent d'une pluralité d'objets, et lesdits moyens de dérivation sont configurés pour dériver le statut de crédit associé à l'utilisateur à l'égard de chacun desdits ensembles d'objets de manière à sélectionner l'un des articles de contenu pour remise à l'utilisateur.

10. Un procédé de remise d'articles de contenu à un utilisateur d'un terminal mobile (16A, 16B) utilisant un réseau de communication (18), chacun desdits articles de contenu étant associé à un objet devant être acheté par l'utilisateur, comprenant :
la réception de données représentatives d'au moins l'un desdits articles de contenu devant être remis au terminal mobile (16A, 16B) ;
l'accès à un système de facturation (26) configuré pour enregistrer l'usage du réseau de communication (18) par l'utilisateur de manière à identifier un statut de crédit de l'utilisateur à l'égard d'au moins un objet associé audit au moins un article de contenu ;
la sélection d'un article de contenu pour remise à l'utilisateur via la réseau de communication (18) sur la base du statut de crédit identifié ; et
la génération d'un message contenant l'article de contenu sélectionné, et la remise sélective du message généré à l'utilisateur via le réseau de communication (18).

11. Le procédé de la revendication 10, comprenant en outre la réception de données représentatives de l'article de contenu depuis un système de messagerie électronique, et la génération d'un message pour la remise au système de messagerie électronique pour permettre l'obtention de l'objet associé par l'utilisateur.

12. Le procédé de la revendication 10 ou de la revendication 11, comprenant en outre l'accès à une base de données conservant des données de profil d'utilisateur de manière à déterminer si l'utilisateur satisfait ou non un profil d'utilisateur cible pour la remise de l'article de contenu, et l'identification sélective du statut de crédit pour l'utilisateur au cas où l'utilisateur satisfait à un profil utilisateur prédéterminé à l'égard de l'article de contenu.

13. Le procédé de la revendication 10, comprenant en outre l'accès à un système d'enregistrement de crédit conservant des données indiquant le crédit effectif associé à l'utilisateur et l'application d'une fonction au crédit effectif de manière à identifier ledit statut de crédit.

14. Le procédé de la revendication 10 ou de la revendication 13, dans lequel il existe une pluralité d'articles de contenu, chacun pour un objet différent, le procédé comprenant en outre l'identification du statut de crédit pour chacun desdits objets dans un ordre dépendant du prix d'achat de celui-ci et la remise de l'article de contenu sélectionné au terminal mobile de l'utilisateur dans un ordre basé sur le prix d'achat.

15. Un programme informatique, ou une suite de programmes informatiques, comprenant un jeu d'instructions configuré pour faire en sorte qu'un calculateur, ou une suite de calculateurs, exécutent le procédé selon l'une des revendications 10 à 14.
